# EUROPÄISCHE PATENTANMELDUNG

(11) **EP 2 348 293 A1**
(43) Veröffentlichungstag der Anmeldung: **27.07.2011**
(21) Anmeldenummer: 10015083.8
(22) Anmeldetag: 29.11.2010
(51) Int. Cl.: G01F 23/26

(54) **Verfahren zur kapazitiven Füllstands- und Konzentrationsmessung von Flüssigkeiten**

(30) Priorität: 01.12.2009 DE 102009056252
(71) Anmelder: Hirschmann Automotive GmbH, 6830 Rankweil-Brederis (AT)
(72) Erfinder: Dengler, Werner, 5132 Geretsberg (AT)
(74) Vertreter: Greif, Thomas

(57) **Zusammenfassung**

Die Erfindung betrifft ein Verfahren zur kapazitiven Bestimmung des Füllstandes und/oder des Mischungsverhältnisses zumindest zweier Bestandteile, insbesondere Flüssigkeiten, in einem Behälter mittels zweier Elektroden, wobei erfindungsgemäß vorgesehen ist, dass die beiden außerhalb des Behälters angeordneten Elektroden mit einer vorgebbaren Hochfrequenz betrieben werden und die sich abhängig von dem Füllstand und/oder dem Mischungsverhältnis ergebende Kapazität und der Widerstand ausgewertet werden und daraus der Verlustwinkel bestimmt wird, der ein Maß für den Füllstand und/oder das Mischungsverhältnis ist.

## Beschreibung

Die Erfindung betrifft ein Verfahren zur kapazitiven Bestimmung des Füllstandes und/oder des Mischungsverhältnisses zumindest zweier Bestandteile, insbesondere Flüssigkeiten, in einem Behälter mittels zweier Elektroden gemäß den Merkmalen des Oberbegriffes des Patentanspruches 1.

Im Stand der Technik gibt es bereits kapazitive Füllstandsmessungen für Flüssigkeiten (Fluide). Diesen ist gemeinsam, dass die messenden Elektroden zumeist mit dem Medium (der Flüssigkeit) in Berührung kommen müssen. Die herkömmliche Realisierung solcher Füllstandmessungen mittels eines Sigma-Delta-Wandlers erlaubt keine Trennung verschiedener Medien. Die Messfrequenzen sind zudem nicht exakt bestimmbar, was erhebliche Nachteile bei der EMV-gerechten Auslegung, besonders im fahrzeugtechnischen (automotiven) Bereich, zur Folge hat. Außerdem haben Verschmutzungen der Elektroden oder Kontamination der Flüssigkeiten erheblichen Einfluss auf die Güte des Messwertes, der den Füllstand und/oder die Konzentration darstellt.

Der Erfindung liegt daher die Aufgabe zu Grunde, ein Verfahren zur kapazitiven Bestimmung des Füllstandes und/oder des Mischungsverhältnisses zumindest zweier Bestandteile, insbesondere Flüssigkeiten, in einem Behälter mittels zweier Elektroden anzugeben, bei dem die Bestandteile exakt bestimmt werden können und ein direkter Kontakt der Messelektroden mit den Bestandteilen vermieden wird. Zusätzlich sollen die Bestandteile bzw. bei Bekanntsein eines Bestandteiles, die Kontamination oder die Beimischung von Bestandteilen (wie z.B. Additive) verlässlich erkannt werden.

Diese Aufgabe ist durch den Patentanspruch 1 gelöst.

Erfindungsgemäß ist vorgesehen, dass die beiden außerhalb des Behälters angeordneten Elektroden (Messelektroden) mit einer vorgebbaren Hochfrequenz betrieben werden und die sich, abhängig von dem Füllstand und/oder dem Mischungsverhältnis, ergebende Kapazität und der Widerstand ausgewertet werden und daraus der Verlustwinkel bestimmt wird, der ein Maß für den Füllstand und/oder des Mischungsverhältnisses ist.

Das Mischungsverhältnis wird insbesondere dadurch erfasst, dass an die Elektroden eine vorgegebene Hochfrequenz angelegt wird und die sich durch Einwirkung der Bestandteile in dem Behälter einstellende Kapazität und der Widerstand ausgewertet werden. Die Messelektroden bilden einen realen Kondensator, der parasitäre ohmsche Verluste aufweist. Diese ohmschen Verluste sowie die Anwesenheit der Bestandteile in dem Behälter bewirken, dass die Phasenverschiebung zwischen Strom und Spannung an den Klemmen der den realen Kondensator bildenden Messelektroden nicht mehr genau 90° beträgt, sondern um den Verlustwinkel reduziert ist. Dieser Winkel wird als Tangens ausgedrückt und heißt dann Verlustfaktor. Er ergibt sich aus dem Tangens des Phasenwinkels zwischen der geometrischen Summe der kapazitiven und induktiven Blindwiderstände und dem Ersatzreihenwiderstand. Somit lässt sich bei der vorgebbaren Hochfrequenz die Kapazität und der Widerstand feststellen und daraus der Verlustwinkel ableiten, der ein Maß für den Füllstand und/oder insbesondere das Mischungsverhältnis ist.

In Weiterbildung der Erfindung wird eine Messschaltung mit der vorgegebenen Hochfrequenz betrieben, die die Kapazität und den Widerstand (also die kapazitiven und induktiven Blindwiderstände bzw. die Serien- und Parallelwiderstände) erfasst und daraus den Verlustwinkel bestimmt, wobei aus dem Verlustwinkel eine die Elektrizitätskonstante der Bestandteile ermittelt wird und bei Bekanntsein eines Bestandteiles des Mischungsverhältnis der beiden Bestandteile bestimmt wird. Hierbei wird die Tatsache, ausgenutzt, dass alle Beimischungen z.B. zu Wasser oder zu Treibstoffen oder zu Ölen oder dergleichen, ein für sie typisches Epsilon (Dielektrizitätskonstante) aufweisen. Ist die Dielektrizitätskonstante eines Bestandteils bekannt und wird auf Grund des Vorhandenseins zweier Bestandteile eine andere Dielektrizitätskonstante ermittelt, lässt sich aus dem Unterschied dieser beiden Dielektrizitätskonstanten (einmal bekannt und einmal gemessen) das Mischungsverhältnis der beiden Bestandteile bestimmen. Das bedeutet, dass sich aus den typischen Dielektrizitätskonstanten der Bestanteile, insbesondere der Flüssigkeiten, eindeutige Verlustwinkel bei der vorgegebenen Frequenz ergeben, so dass daraus das Mischungsverhältnis der beiden Flüssigkeiten bestimmt werden kann.

In Weiterbildung der Erfindung wird der Füllstand mittels einer differenziellen Kapazitätsmessung bestimmt. Somit kann in herkömmlicher Weise z.B. mittels eines Sigma-Delta-Wandlers über differenzielle Kapazitätsmessung der Füllstand, insbesondere die Höhe der beiden gemischten Flüssigkeiten in dem Behälter, erfasst werden, da der Füllstand von dem Mischungsverhältnis nahezu unabhängig ist und nur durch Entnahme oder Zufluss variiert.

In Weiterbildung der Erfindung liegt die vorgebbare Frequenz im Bereich zwischen 6 MHz und 10 MHz. Dies hat den Vorteil, dass für bestimmte Anwendungsbereiche, insbesondere im automotiven Bereich, eine EMV-gerechte Auslegung der Messschaltung und des gesamten Verfahrens erfolgen kann.

In Weiterbildung der Erfindung wird die Umgebungstemperatur gemessen und berücksichtigt. Dadurch lassen sich die Ergebnisse bei der Ermittlung insbesondere des Mischungsverhältnisses deutlich verbessern, da die Temperatur auf die die Elektrizitätskonstanten einen Einfluss hat.

In besonders vorteilhafter Weise wird das erfindungsgemäße Verfahren im Fahrzeugbereich (automotiver Bereich) angewendet. Hier kommt beispielsweise in Betracht, dass Wasser in einem Behälter eingefüllt und anschließend ein Frostschutzmittel oder ein Reinigungsmittel hinzugegeben wird. Mit dem erfindungsgemäßen Verfahren kann beispielsweise dem Anwender des Fahrzeuges ein Signal gegeben werden, welche Menge an Frostschutzmittel für bestimmte vorgebbare Tiefsttemperaturen ausreichend ist. Damit wird in vorteilhafter Weise eine Verschwendung von zu viel Frostschutzmittel in dem Waschwasserbehälter vermieden. Alternativ zur Basisflüssigkeit Wasser, deren Elektrizitätskonstante bekannt ist und bei Zufügung von Reinigungs- oder Frostschutzmitteln abweicht, wobei aus dieser Abweichung das Mischungsverhältnis mit der vorliegenden Erfindung hergeleitet werden kann, kommen auch andere Flüssigkeiten mit Zusatzstoffen in Betracht. Hier sind z.B. Treibstoffe für Verbrennungsmotoren von Fahrzeugen zu nennen, denen Additive (z.B. Adblue) zugesetzt werden Hier ist insbesondere für die Steuerung bzw. Regelung der Verbrennung dieser Treibstoffe in dem Verbrennungsmotor die Kenntnis des genauen Mischungsverhältnisses von besonderer Bedeutung, da der Verbrennungsprozess (insbesondere die Anzahl der Einspritzungen und der eingespritzten Mengen in den Zylinder des Verbrennungsmotors) von dem Mischungsverhältnis abhängt und nur bei Bekanntsein des Mischungsverhältnisses die richtige Menge eingespritzt werden kann, um unnötige Verschmutzungen bei der Verbrennung (wie z.B. die Entstehung von Stickoxyden) zu vermeiden.

## Patentansprüche

1. Verfahren zur kapazitiven Bestimmung des Füllstandes und/oder des Mischungsverhältnisses zumindest zweier Bestandteile, insbesondere Flüssigkeiten, in einem Behälter mittels zweier Elektroden, **dadurch gekennzeichnet, dass** die beiden außerhalb des Behälters angeordneten Elektroden mit einer vorgebbaren Hochfrequenz betrieben werden und die sich abhängig von dem Füllstand und/oder dem Mischungsverhältnis ergebende Kapazität und der Widerstand ausgewertet werden und daraus der Verlustwinkel bestimmt wird, der ein Maß für den Füllstand und/oder das Mischungsverhältnis ist.

2. Verfahren nach Anspruch 1, **dadurch gekennzeichnet, dass** eine Messschaltung mit der vorgegebenen Hochfrequenz betrieben wird und die Kapazität und den Widerstand erfasst und daraus der Verlustwinkel bestimmt wird, wobei aus dem Verlustwinkel eine Dielektrizitätskonstante der Bestandteile ermittelt wird und bei Bekanntsein eines Bestandteiles das Mischungsverhältnis der beiden Bestandteile bestimmt wird.

3. Verfahren nach Anspruch 1 oder 2, **dadurch gekennzeichnet, dass** der Füllstand mittels einer differentiellen Kapazitätsmessung bestimmt wird.

4. Verfahren nach Anspruch 1, 2 oder 3, **dadurch gekennzeichnet, dass** die vorgebbare Frequenz im Bereich zwischen 6 und 10 MHz liegt.

5. Verfahren nach einem der vorhergehenden Ansprüche, **dadurch gekennzeichnet, dass** die Umgebungstemperatur gemessen und berücksichtigt wird.

6. Verfahren nach einem der vorhergehenden Ansprüche, angewendet im Fahrzeugbereich.
